## Europäisches Patentamt

## European Patent Office

## Office européen des brevets

(11) Numéro de publication: **0 153 888**
**B1**

(12)

# FASCICULE DE BREVET EUROPEEN

(45) Date de publication du fascicule du brevet:
**22.04.87**

(51) Int. Cl.⁴: **B 60 T 13/24**

(21) Numéro de dépôt: **85400237.5**

(22) Date de dépôt: **13.02.85**

(54) **Servomoteur d'assistance au freinage.**

(30) Priorité: **22.02.84 FR 8402656**

(43) Date de publication de la demande:
**04.09.85 Bulletin 85/36**

(45) Mention de la délivrance du brevet:
**22.04.87 Bulletin 87/17**

(84) Etats contractants désignés:
**DE GB IT**

(56) Documents cités:
**FR - A - 2 502 567**
**GB - A - 2 121 898**

(73) Titulaire: **BENDIX France, 126, rue de Stalingrad, F-93700 Drancy (FR)**

(72) Inventeur: **Gautier, Jean-Pierre, 46 ter, Avenue Louis Blanc, F-93600 Aulnay-sous-Bois (FR)**

(74) Mandataire: **Le Moenner, Gabriel et al, SERVICE BREVETS BENDIX 44, Rue François 1er, F-75008 Paris (FR)**

## Description

La présente invention concerne les servomoteurs d'assistance au freinage, notamment pour véhicules automobiles, et plus particulièrement les servomoteurs pneumatiques du type comprenant un boîtier, une structure de piston divisant intérieurement le boîtier en deux chambres, un moyen de valve de distribution disposé dans un corps de valve solidaire centralement de la structure de piston et actionné par un organe d'entrée pour créer sélectivement une différentielle de pression entre les chambres, le moyen de valve comportant un plongeur monté à coulissement dans le corps de valve, relié à l'organe d'entrée et définissant à une de ses extrémités un siège mobile de clapet, un siège fixe de clapet formé dans le corps de valve, concentriquement au siège mobile de clapet, un moyen de clapet monté dans le corps de valve et sollicité élastiquement vers les sièges de clapet fixe et mobile, un ressort de rappel prenant appui dans le corps de valve et sollicitant l'organe d'entrée dans la direction opposée aux sièges de clapet fixe et mobile, et un organe de retenue s'étendant dans le corps de valve et comprenant une première zone coopérant en contact d'engagement avec un épaulement du plongeur et une seconde zone, extérieure au corps de valve, destinée à coopérer en butée avec un élément stationnaire solidaire du boîtier afin de déterminer, en configuration de repos du servomoteur, la position de repos du plongeur.

Un tel servomoteur est décrit par exemple dans le brevet britannique GB-A-1 515 690, où l'organe de retenue est constitué par un prolongement intérieur du disque en tôle formant partie de la structure de piston, ou dans la demande de brevet français FR-A-2 480 692, où l'organe de retenue est constitué par une clé portée par la structure de piston ou de plongeur. Dans ce dernier cas, l'organe de retenue ou clé est conçu de façon à pouvoir se déplacer en translation suivant l'axe général du servomoteur par rapport au corps de valve dans un agencement ne permettant toutefois pas de garantir un déplacement sûr et précis de l'organe de retenue par rapport au corps de valve ni d'éviter des risques d'interférence avec le mouvement relatif du plongeur ou de mise en travers de l'organe de retenue par rapport au plongeur et/ou au corps de valve.

La présente invention a pour objet de proposer un nouvel agencement de servomoteur du type défini plus haut, comportant un organe de retenue associé au corps de valve de façon à garantir un déplacement sûr et précis de cet organe de retenue par rapport au corps de valve, assurant ainsi au plongeur des positionnements également précis et insensibles aux conditions d'utilisation du servomoteur, permettant de respecter en permanence une levée optimale du moyen de clapet en phase de relâchement du freinage, d'une part, et une course morte réduite en phase d'actionnement, d'autre part.

Pour ce faire, selon une caractéristique de l'invention, l'organe de retenue est monté dans le corps de valve à pivotement autour d'un axe perpendiculaire à la direction de coulissement du plongeur et comporte une troisième zone destinée, lors du basculement de l'organe de retenue autour dudit axe, à coopérer en butée avec une surface correspondante du plongeur afin de déterminer pour ce dernier une position de retrait maximum par rapport au corps de valve sous l'effet du ressort de rappel.

Selon une caractéristique plus particulière de l'invention, l'organe de retenue comprend un élément cylindrique coaxial audit axe, comportant une rainure longitudinale délimitée d'un côté par une première surface de came constituant ladite première zone, et au moins un levier palpeur profilé solidaire de l'élément cylindrique et mobile en basculement dans un plan perpendiculaire audit axe, à l'extérieur du corps de valve, dont une arête constitue ladite seconde zone.

Selon une autre caractéristique particulière de l'invention, le corps de valve coulisse de façon étanche dans une cheminée centrale du boîtier et il est prévu un organe annulaire monté dans cette cheminée de façon à former butée pour ladite arête du levier palpeur de l'organe de retenue.

D'autres caractéristiques et avantages de la présente invention ressortiront de la description suivante d'un mode de réalisation donné à titre illustratif mais nullement limitatif, faite en relation avec les dessins annexés, sur lesquels :

— la Fig. 1 est une vue partielle en coupe longitudinale d'un servomoteur d'assistance selon l'invention ;

— la Fig. 2 est une vue en coupe transversale suivant la ligne de coupe II-II de la Fig. 1, et

— la Fig. 3 est une vue partielle, analogue à la Fig. 1, montrant l'agencement des éléments constitutifs du moyen de valve lors du début d'une phase de retour correspondant à un relâchement de la pression de freinage.

Le servomoteur d'assistance au freinage selon l'invention, du type général décrit dans les documents mentionnés plus haut, comprend un boîtier 1 (dont on ne voit que la portion centrale de la coquille arrière sur les figures) divisé intérieurement par une structure de piston 2, constituée classiquement d'une membrane en élastomère et d'un disque support métallique 4, en deux chambres, typiquement une chambre avant 5 destinée à être reliée en permanence à une source de vide, et une chambre arrière ou chambre de travail 6 destinée à être reliée sélectivement à la chambre avant 5 ou à l'atmosphère par un moyen de valve de distribution comme on le verra plus avant. La structure de piston 2 est fixée centralement sur un moyeu 7, réalisé typiquement en matériau plastique, se prolongeant vers l'arrière et vers l'extérieur par un corps de valve tubulaire 8 coulissant de façon étanche au travers d'un ensemble de guidage et d'étanchéité 20 monté dans un prolongement tubulaire arrière ou cheminée 21 du boîtier 1.

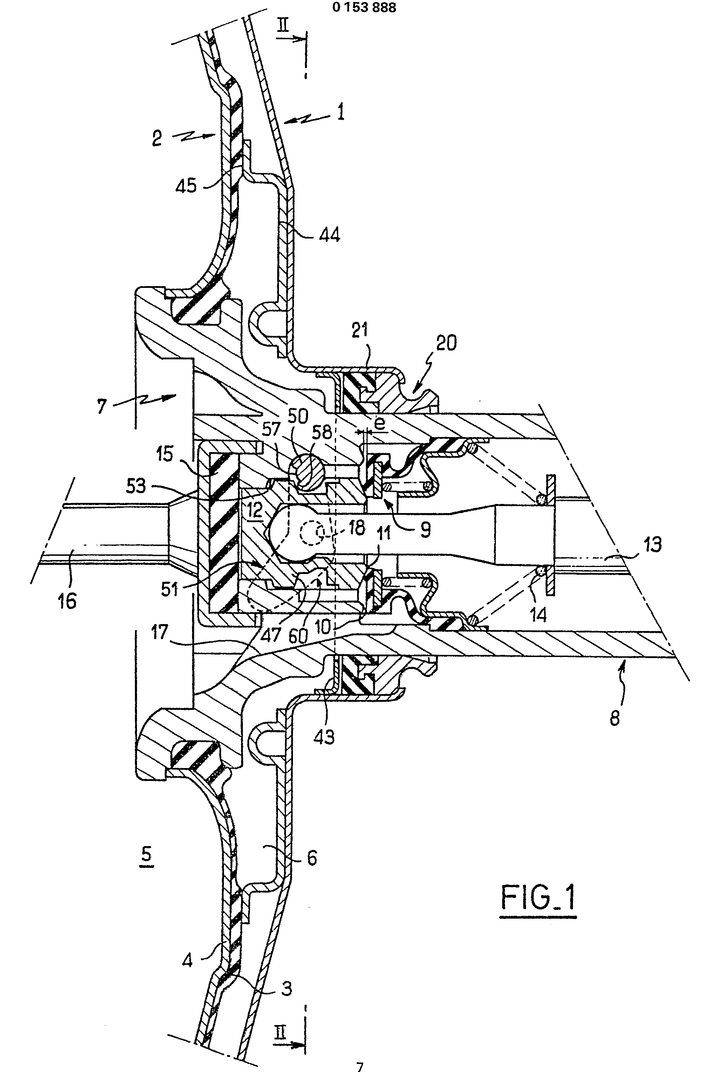

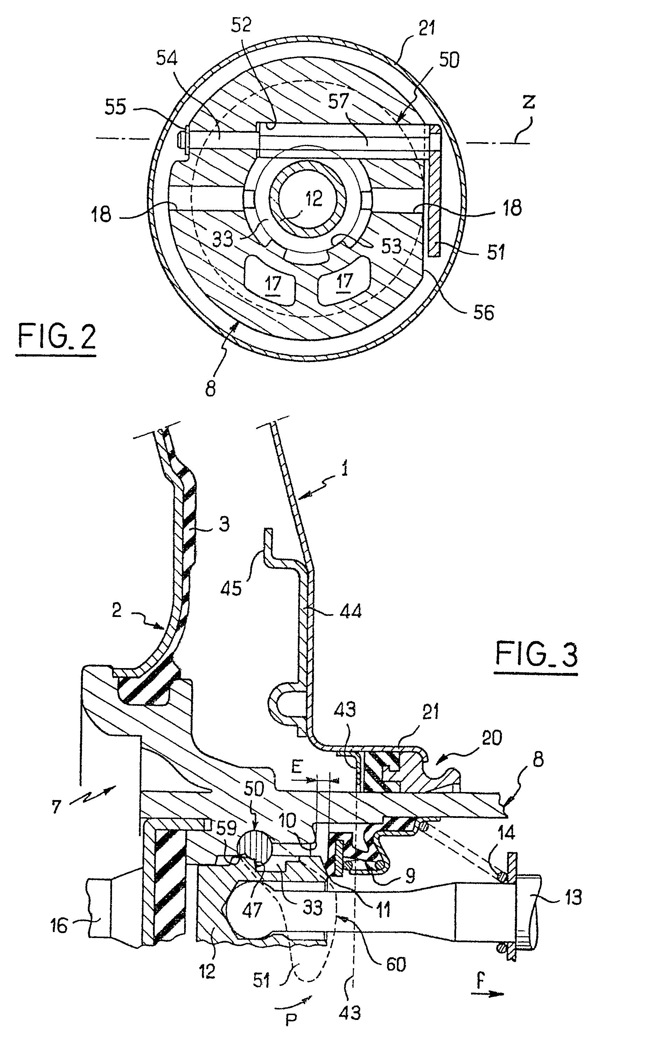

Dans le corps de valve 8 est monté un moyen de clapet sollicité élastiquement, désigné généralement par la référence 9, destiné à coopérer avec un siège fixe de clapet 10 formé centralement dans le corps de valve, et avec un siège mobile de clapet 11, avantageusement tronconique, formé à l'extrémité arrière d'un plongeur 12 coulissant dans un logement central du corps de valve et solidarisé à une tige d'entrée et d'actionnement 13 destinée à être reliée à une pédale de frein d'un véhicule automobile (non représentée). De façon également classique, la tige 13 (et, partant, le plongeur 12) est sollicitée vers l'arrière par un ressort de rappel 14 prenant appui sur un épaulement de la tige 13 et sur un épaulement à l'intérieur du corps de valve 8, en l'occurrence formé par le fourreau de montage du moyen de clapet 9. Par son extrémité opposée à la tige 13, le plongeur 12 coopère en poussée avec un disque de réaction en matériau élastomère 15 intercalé entre le plongeur 12 et la tige de sortie 16 du servomoteur destinée à actionner le piston d'un maître-cylindre associé au servomoteur. Dans la position de repos du servomoteur représentée sur la Fig. 1, le moyen de clapet 9 est en appui contre le siège de clapet mobile 11 et écarté, par ce dernier, du siège fixe de clapet 10 d'une distance e, autorisant ainsi la communication entre les chambres 5 et 6 par des passages longitudinaux 17 et des passages radiaux 18, diamétralement opposés comme on le voit bien sur la Fig. 2, formés dans l'ensemble moyeu 7/corps de valve 8. En fonctionnement, lorsque la tige 13 est enfoncée vers la gauche pour amorcer une phase de freinage, le moyen de clapet 9 vient en appui contre le siège fixe de clapet 10 tout en demeurant en appui contre le siège mobile de clapet 11, interrompant ainsi la communication entre les deux chambres 5 et 6. Un complément de déplacement de la tige 13 dans la même direction écarte alors le siège mobile de clapet 11 du moyen de clapet 9 (maintenu en appui contre le siège fixe de clapet 10) pour admettre de façon mesurée dans la chambre arrière 6 de l'air atmosphérique provenant de l'extérieur par le passage interne formé dans le corps de valve tubulaire 8. Une caractéristique importante de ce type de servomoteur réside dans la course morte d'actionnement figurée par le jeu e existant, au repos, entre le moyen de clapet 9 et le siège fixe de clapet 10. On comprendra que, le moyen de clapet 9 étant sollicité élastiquement en direction des sièges mobile 11 et fixe 10, ce jeu e est déterminé par la position au repos du plongeur 12 par rapport au corps de valve 8 qui, lui-même, ainsi que la structure de piston 2, doit être positionné dans une configuration de repos par rapport au boîtier 1 fixé sur une structure stationnaire du véhicule.

Conformément à l'invention, le positionnement du plongeur 12 est assuré par un organe de retenue comprenant, comme on le voit mieux sur la Fig. 2, un élément d'axe cylindrique 50 et au moins un levier palpeur 51. L'élément cylindrique 50 est monté à rotation dans un alésage étagé 52 formé dans le corps de valve 8, d'axe Z perpendiculaire à la direction de coulissement du plongeur 12, la partie principale, de plus grand diamètre, de l'alésage 52 intersectant l'alésage central 53 dans lequel coulisse le plongeur 12. La partie principale de l'élément cylindrique 50 est prolongée par un élément d'axe de plus petit diamètre 54 faisant saillie hors de l'alésage 52 et muni d'une rondelle de blocage en translation 55. A l'opposé de cette rondelle 55, la partie principale de l'élément cylindrique 50 est solidarisée à un levier palpeur 51 disposé à l'extérieur du corps de valve 8, à l'intérieur du cercle inscrit de la cheminée 21 et pouvant pivoter dans un plan perpendiculaire à l'axe Z au voisinage d'un pan coupé externe 56 du corps de valve 8.

Le plongeur 12 est pourvu d'une gorge périphérique 33, délimité vers l'avant par un épaulement oblique 47. Avec l'agencement général décrit ci-dessus, la partie principale de l'élément cylindrique 50 est partiellement reçue dans la gorge annulaire 33 du plongeur 12 et, au moins à cet endroit, l'élément cylindrique 50 est pourvu d'une rainure longitudinale 57 délimitée longitudinalement d'un côté par une première surface de came 58 et, de l'autre côté, par une seconde surface de came 59. Le levier palpeur 51 présente une forme générale de boomerang en porte à faux par rapport à l'élément cylindrique 50, l'arête convexe 60 du boomerang présentant un profil arrondi évolutif formant came et destiné à coopérer avec une face de butée constituée par une collerette 43 montée dans la cheminée 21 en avant de l'ensemble de guidage et d'étanchéité 20.

Dans la position de repos du servomoteur représentée sur la Fig. 1, la structure de piston 2 est en butée contre le boîtier 1, par exemple contre une face de butée 45 formée par un renfort annulaire 44 fixé intérieurement sur la paroi arrière du boîtier 1, autour du moyen de valve 8. Le levier palpeur 51 porte en appui, au niveau sensiblement du coude de l'arête 60, contre la collerette 43. Dans cette configuration, l'épaulement 47 de la gorge annulaire 33 du plongeur 12 est en appui contre la première surface de came 58 de l'élément cylindrique 50, déterminant ainsi avec précision le jeu e ou course morte d'actionnement du moyen de valve 9. Lorsque la tige 13 est enfoncée, dans une phase de freinage, le plongeur 12 est déplacé vers l'avant, en appui contre le disque 15, l'extension axiale de la gorge 33 permettant à l'élément cyclindrique 50 de se désengager de l'épaulement 47. L'organe de retenue 50, 51 suit ensuite le déplacement de l'ensemble moyeu 7/corps de valve 8. Lorsque, à partir d'une telle configuration de freinage, la force exercée sur la tige 13 est relâchée, cette dernière, sous l'effet du ressort de rappel 14, se déplace vers l'arrière dans le sens de la flèche f sur la Fig. 3, en provoquant ainsi un déplacement relatif vers l'arrière du plongeur 12 par rapport au corps de valve 8. Ce faisant, l'épaulement 47 de la gorge 33 revient porter contre la première surface de came 58 de la rainure 57 et force également cette surface de came à se déplacer vers l'arrière, ce qui se traduit par une rotation vers l'arrière, dans le sens de la flèche P sur la figure 3, de l'organe de retenue 50, 51. Ce mouvement de basculement de l'organe de retenue et, partant, le recul du plongeur 12 dans la direction de la flèche f, est limité par la venue en butée de la seconde surface de came 59 de la rainure 57 contre la paroi périphérique du plongeur 12 voisine de l'épaulement 47. Dans la configuration ainsi obtenue, représentée sur la figure 3, on obtient une surouverture E du moyen de clapet 9 — forcé vers l'arrière par le plongeur 12 — par rapport au siège fixe de clapet 10 favorisant une dépressurisation rapide de la chambre de travail arrière 6 du servomoteur pour permettre à celui-ci de recouvrer rapidement une position d'équilibre. Si la force exercée sur la tige est totalement relâchée, l'ensemble structure de piston 2/moyeu 3/corps de valve 8/plongeur 12/tige 13 est ramené vers la position de repos de la figure 1, c'est-à-dire, à partir de la configuration de la figure 3 conservée jusqu'alors, l'arête 60 du levier 51 vient porter et rouler contre la collerette 43 pour faire pivoter l'organe de retenue 50, 51 dans le sens inverse de la flèche P jusqu'à recouvrer la position de repos représentée sur la figure 1. Lors de ce mouvement de basculement inverse de l'organe de retenue, la première surface de came 58 repousse le plongeur 12, via son épaulement 47, vers l'avant, à l'encontre de la force de rappel du ressort 14, en dégageant la seconde surface de came 59 de la périphérie du plongeur 12 pour ramener la levée du moyen de clapet 9 par rapport au siège fixe de clapet 10 de la valeur de surouverture E à la valeur réduite e qui peut être déterminée avec précision car la chaîne de côtes peut être également réduite. On notera à ce propos que la position de montage requise pour la collerette 43 peut être déterminée, éventuellement modulée légèrement, avec une grande précision.

On notera également que l'organe de retenue peut comporter un second levier palpeur monté par exemple à l'extrémité de l'axe 54 et calé angulairement par rapport à celui-ci pour doubler exactement le premier levier palpeur 51, le corps de valve 8 étant pourvu, dans ce cas, d'un second pan coupé parallèle au premier pan coupé 56. On peut également pourvoir ce pan coupé d'une butée pour le levier 51 limitant son débattement dans le sens opposé à celui de la flèche P de façon que l'organe de retenue constitue également une butée pour l'ensemble piston 2/moyeu 7 en place et lieu de la butée 45 du boîtier.

## Revendications

1. Servomoteur d'assistance au freinage comprenant:
— un boîtier (1),
— une structure de piston (2) divisant intérieurement le boîtier en deux chambres (5, 6),
— un moyen de valve de distribution (9, 10, 11) disposé dans un corps de valve (8) solidaire centralement de la structure de piston (2) et actionné par un organe d'entrée (13) pour créer sélectivement une différentielle de pression entre les chambres,
le moyen de valve comportant:
— un plongeur (12) monté à coulissement dans le corps de valve (8), relié à l'organe d'entrée (13) et définissant à une de ses extrémités un siège mobile de clapet (11),
— un siège fixe de clapet (10) formé dans le corps de valve (8), concentriquement au siège mobile de clapet (11),
— un moyen de clapet (9) monté dans le corps de valve et sollicité élastiquement vers les sièges de clapet fixe et mobile,
— un ressort de rappel (14) prenant appui dans le corps de valve (8) et sollicitant l'organe d'entrée (13) dans la direction opposée aux sièges de clapet fixe et mobile, et
— un organe de retenue (50, 51) s'étendant dans le corps de valve (8) et comprenant une première zone (58) coopérant en contact d'engagement avec un épaulement (47) du plongeur (12) et une seconde zone (60), extérieure au corps de valve (8), destinée à coopérer en butée avec un élément stationnaire solidaire du boîtier afin de déterminer, en configuration de repos du servomoteur, la position de repos du plongeur, caractérisé en ce que l'organe de retenue (50, 51) est monté dans le corps de valve (8) à pivotement autour d'un axe (Z) perpendiculaire à la direction de coulissement du plongeur (12) et comporte une troisième zone (59) destinée, lors du basculement (8) de l'organe de retenue autour dudit axe, à coopérer en butée avec une surface correspondante du plongeur (12) afin de déterminer pour ce dernier une position de retrait maximum (E) par rapport au corps de valve (8) sous l'effet du ressort de rappel (14).

2. Servomoteur selon la revendication 1, caractérisé en ce que l'organe de retenue (50, 51) comprend un élément cylindrique (50) co-axial audit axe (Z) comportant une rainure longitudinale (57) délimitée d'un côté par une première surface de came (58) constituant ladite première zone, et au moins un levier palpeur profilé (51) solidaire de l'élément cylindrique (50) et mobile en basculement dans un plan perpendiculaire audit axe (2), à l'extérieur du corps de valve (8), dont une arête (60) constitue ladite seconde zone.

3. Servomoteur selon la revendication 2, caractérisé en ce que l'élément cylindrique (50) est partiellement reçu dans une gorge périphérique (33) du plongeur (12) formant ledit épaulement (47), la rainure (57) étant délimitée, de l'autre côté, par une seconde surface de came (59) susceptible de venir porter en appui contre la surface périphérique du plongeur voisine dudit épaulement (47) et constituant ladite troisième zone.

4. Servomoteur selon l'une des revendications 2 ou 3, dans lequel le corps de valve (8) coulisse de façon étanche dans une cheminée centrale (21) du boîtier (1), caractérisé en ce qu'il comporte un organe annulaire (43) monté dans la cheminée (21) et formant butée pour l'arête (60) du levier palpeur (51).

5. Servomoteur selon la revendication 4, caractérisé en ce que l'arête (60) présente un profil arrondi.

6. Servomoteur selon l'une des revendications 1 à 5, caractérisé en ce que l'élément cylindrique (50) est monté dans un alésage étagé transversal (52) du corps de valve (8) et est prolongé par un élément d'axe de plus petit diamètre (54) et pourvu à son extrémité d'un organe de blocage en translation (55).

7. Servomoteur selon l'une des revendications précédentes, caractérisé en ce que le boîtier (1) comporte un renfort annulaire intérieur (44) entourant le corps de valve (8) et formant surface de butée (45) pour la structure de piston (2).

## Patentansprüche

1. Servomotor für eine Bremshilfe, mit:
- einem Gehäuse (1),
- einer Kolbenanordnung (2), die das Gehäuse im Inneren in zwei Kammern (5, 6) unterteilt,
- einer Verteilerventileinrichtung (9, 10, 11), die in einem an der Kolbenanordnung (2) zentral befestigten Ventilgehäuse (8) angeordnet und durch ein Eingangsglied (13) betätigbar ist, um eine Druckdifferenz zwischen den Kammern wahlweise zu erzeugen,
- wobei die Ventileinrichtung aufweist:
- einen Kolben (12), der in dem Ventilgehäuse (8) gleitbar gelagert ist, mit dem Eingangsglied (13) verbunden ist und an einem seiner Enden einen beweglichen Ventilsitz (11) bildet,
- einen ortsfesten Ventilsitz (10), der in dem Ventilgehäuse (8) konzentrisch zu dem beweglichen Ventilsitz (11) gebildet ist,
- einen Schliesskörper (9), der in dem Ventilgehäuse angeordnet ist und in Richtung auf den beweglichen und ortsfesten Ventilsitz elastisch vorgespannt wird,
- eine Rückholfeder (14), die an dem Ventilgehäuse (8) abgestützt ist und das Eingangsglied (13) in die dem beweglichen und ortsfesten Ventilsitz entgegengesetzte Richtung vorspannt, und
- ein Halteteil (50, 51), das sich in das Ventilgehäuse (8) hineinerstreckt und versehen ist mit einem ersten Bereich (58), der mit einer Schulter (47) des Kolbens berührungsmässig zusammenwirkt, und einem ausserhalb des Ventilgehäuses (8) liegenden zweiten Bereich (60), der anschlagmässig mit einem stationären, mit dem Gehäuse fest verbundenen Bauteil zusammenwirkt, um im Ruhezustand des Servomotors die Ruhelage des Kolbens festzulegen, dadurch gekennzeichnet, dass das Halteteil (50, 51) im Ventilgehäuse (8) um eine zur Gleitrichtung des Kolbens (12) senkrechte Achse (Z) schwenkbar ist und einen dritten Bereich (59) aufweist, der bei einer Schwenkbewegung (8) des Halteteils um die besagte Achse dazu dient, mit einer entsprechenden Fläche des Kolbens (12) anschlagmässig zusammenzuwirken, um für diesen unter der Wirkung der Rückholfeder (14) eine maximal zurückgezogene Stellung (E) bezüglich des Ventilgehäuses (8) festzulegen.

2. Servomotor nach Anspruch 1, dadurch gekennzeichnet, dass das Halteteil (50, 51) versehen ist mit einem zu der besagten Achse (Z) koaxialen zylindrischen Element (50) mit einer Längsnut (57), die auf einer Seite von einer den ersten Bereich bildenden Nockenfläche (58) begrenzt wird, und mindestens einem profilierten Fühlhebel (51), der mit dem zylindrischen Element (50) fest verbunden ist und in einer zu der Achse (Z) senkrechten Ebene ausserhalb des Ventilgehäuses (8) schwenkbar ist, wobei ein Rand (60) desselben den besagten zweiten Bereich bildet.

3. Servomotor nach Anspruch 2, dadurch gekennzeichnet, dass das zylindrische Element (50) teilweise von einer die Schulter (47) bildenden Umfangsnut (33) des Kolbens (12) gebildet wird, wobei die Längsnut (57) auf der anderen von einer zweiten Nockenfläche (59) begrenzt wird, die sich gegen die der Schulter (47) benachbarte Umfangsfläche des Kolbens legen kann und den besagten dritten Bereich bildet.

4. Servomotor nach Anspruch 2 oder 3, bei dem das Ventilgehäuse (8) abgedichtet in einem zentralen Ansatz (21) des Gehäuses (1) gleitet, dadurch gekennzeichnet, das er einen Ringkörper (43) aufweist, der in dem Ansatz (21) angebracht ist und den Anschlag für den Rand (60) des Fühlhebels (51) bildet.

5. Servomotor nach Anspruch 4, dadurch gekennzeichnet, dass der Rand (60) ein abgerundetes Profil aufweist.

6. Servomotor nach einem der Ansprüche 1-5, dadurch gekennzeichnet, dass das zylindrische Element (50) in einer abgestuften Querbohrung (52) des Ventilgehäuses (8) gelagert ist und von einem Achskörper kleineren Durchmessers (54) verlängert wird sowie an seinem Ende mit einem eine Translationsbewegung unterbindenden Sicherungsteil (55) versehen ist.

7. Servomotor nach einem der vorhergehenden Ansprüche, dadurch gekennzeichnet, dass das Gehäuse (1) eine innere ringförmige Verstärkung (44) aufweist, die das Ventilgehäuse (8) umgibt und eine Anschlagfläche (45) für die Kolbenanordnung (2) bildet.

## Claims

1. Servomotor for brake assistance comprising:
- a casing (1),
- a piston structure (2) dividing the casing internally into a pair of chambers (5, 6),
- a valve distribution means (9, 19, 11) disposed in a valve body (8) centrally fixed to the piston structure (2) and actuated by an input member (13) to create selectively a pressure differential between the chambers,
- the valve means comprising:
- a plunger (12) slidingly mounted in the valve body (8), connected to the input member (13) and defining at one of its ends a movable valve seat (11),
- a fixed valve seat (10) formed in the valve body (8) concentrically to the movable valve seat (11),
- a valve means (9) mounted in the valve body and resiliently biased towards the fixed and movable valve seats,
- a return spring (14) supported in the valve body (8) and biasing the input member (13) in the direction opposite the fixed and movable valve seats, and
- a holding member (50, 51) extending into the valve body (8) and comprising a first zone (58) cooperating in abutting engagement with a shoulder (47) of the plunger (12), and a second zone (60) externally of the valve body (8), intended to cooperate in abutting engagement with a stationary element fixed to the casing in order to determine the rest position of the plunger when the servomotor is in its rest condition, characterized in that
— the holding member (50, 51) is mounted in the valve body (8) for pivotal movement about an axis (Z) perpendicular to the sliding direction of the plunger (12) and comprises a third zone (59) intended to cooperate in abutting engagement with a corresponding surface of the plunger (12) when the holding member pivots about said axis in order to determine for the plunger a position (E) of maximum retreat with respect to the valve body (8) under the action of the return spring (14).

2. Servomotor according to claim 1, characterized in that the holding member (50, 51) comprises a cylindrical element (50) coaxial to said axis (Z) comprising a longitudinal groove (57) delimited at one side by a first cam surface (58) forming said first zone, and at least one profiled sensing lever (51) fixed to the cylindrical element (50) and pivotally movable in a plane perpendicular to said axis (Z) externally of the valve body (8), an edge (60) of which forms said second zone.

3. Servomotor according to claim 2, characterized in that the cylindrical element (50) is partially received in a peripheral gauge (33) of the plunger (12) forming said shoulder (47), the groove (57) being delimited at the other side by a second cam surface (59) adapted to abuttingly engage the peripheral surface of the plunger adjacent to said shoulder (47) and forming said third zone.

4. Servomotor according to claim 2 or claim 3, wherein the valve body (8) slides in a sealed manner within a central projection (21) of the casing (1), characterized in that it comprises an annular member (43) mounted in the projection (21) and forming an abutment for the edge (60) of the sensing lever (51).

5. Servomotor according to claim 4, characterized in that the edge (60) has an arcuate profile.

6. Servomotor according to any of claims 1 to 5, characterized in that the cylindrical element (50) is mounted in a transversal stepped bore (52) of the valve body (8) and is prolongated by an axle element of smaller diameter (54) and provided at its end with a translation-blocking member (55).

7. Servomotor according to any of the preceding claims, characterized in that the casing (1) comprises an internal annular reinforcement (44) enclosing the valve body (8) and forming an abutment surface (45) for the piston structure (2).

0 1 5 3 8 8 8

FIG_1

0 153 888

FIG.2

FIG.3

9